# EUROPÄISCHE PATENTSCHRIFT

(11) **EP 1 175 828 B1**
(45) Veröffentlichungstag und Bekanntmachung des Hinweises auf die Patenterteilung: **04.06.2003**
(21) Anmeldenummer: 01107614.8
(22) Anmeldetag: 27.03.2001
(51) Int. Cl.: B01F 7/16, A01K 5/00

(54) **Vertikalmischer für Futter**
Vertical axis fodder mixer
Malaxeur de fourage à axe vertical

(30) Priorität: 25.07.2000 DE 20012862 U
(43) Veröffentlichungstag der Anmeldung: 30.01.2002
(73) Patentinhaber: Trioliet Mullos B.V., 7570 AC Oldenzaal (NL)
(72) Erfinder: Van der Plas, Nicolaas, 7576 WB Oldenzaal (NL)
(74) Vertreter: Grünecker, Kinkeldey, Stockmair & Schwanhäusser Anwaltssozietät

(56) Entgegenhaltungen:
- NL-C- 1 006 275

## Beschreibung

Die Erfindung betrifft einen Vertikalmischer der im Oberbegriff des Anspruchs 1 angegebenen Art.

Bei einem aus der Praxis bekannten Vertikalmischer (R.M.H.) mit zwei Vertikalschnecken sind die beiden Verteilerkegel geringfügig asymmetrisch ausgebildet. Ihre Spitzen liegen jedoch senkrecht oberhalb der Basismitten. .

Aus NL 10 06 275 A ist ein Vertikalmischer mit Befüllung von hinten und zwei gegensinnig angetriebenen Vertikalschnecken bekannt, die mit unterschiedlichen Geschwindigkeiten rotieren, sich überlappende Umlaufbahnen haben, und gesteuerte Mitnehmer tragen. Die beiden Verteilerkegel sind symmetrisch. Die Spitze jedes Verteilerkegels liegt in etwa senkrecht oberhalb der Basismitte.

Bei einem aus US 5 240 321 A bekannten Vertikalmischer sind insgesamt vier Vertikalschnecken in Längsrichtung der Mischkammer hintereinander geordnet, deren Umlaufbahnen sich zum Teil überlappen. Die Mischkammer wird an einem Ende befüllt, das gemischte Futter wird am anderen Ende ausgetragen. Der Vertikalmischer wird beim Mischen an einem Ende angehoben.

Es ist üblich, den Vertikalmischer entweder von oben fremd zu befüllen oder durch eine hintenliegende Selbstbefülleinrichtung mit Futter zu beladen. Wird die Mischkammer von oben fremd befüllt, und zwar zwischen den Verteilerschnecken, ergibt sich dadurch eine anfängliche Verteilung des Futters auf beide Vertikalschnecken. Jede Vertikalschnecke formt beim Mischen durch die Aufwärtsförderung einen "Maulwurfshügel", wobei die Verteilerkegel Toträume vermeiden sollen, in denen sich Futter bewegungslos sammelt, und eine Überleitung des Futters von einer Vertikalschnecke zur nächstliegenden begünstigen sollen. Die Verteilerkegel führen das Futter von oben nach unten einwärts zu den Schneckengängen. Das Futter sollte sich jedoch auch zwischen den beiden Verteilerschnecken hin- und herbewegen, um unterschiedliche Mischverhältnisse zu vermeiden. Bei Befüllung der Mischkammer von hinten ist es bei mehreren Vertikalschnecken noch schwieriger, den zuletzt geladenen Futteranteil über die Mischkammer gleichmäßig zu verteilen. Mit den bekannten Maßnahmen ist eine gleichmäßige Durchmischung des Futters kaum oder nur mit sehr langer Mischzeit zu erzielen.

Unter einem hier erwähnten Verteilerkegel ist im übrigen ein Gebilde ähnlich der Hälfte einer in einer vertikalen Diagonalebene geteilten vierseitigen Pyramide vorzustellen, die mit ihrer Teilungsebene an die Längswand der Mischkammer angeschmiegt ist, wobei die Basisseiten und die Oberflächen der Pyramide in Hochrichtung und/oder in Horizontalrichtung konkav gekrümmt sein können. Die konkave Krümmung in Horizontalrichtung kann kontinuierlich oder aus einzelnen geraden Abschnitten zusammengesetzt sein. Die Spitze des Verteilerkegels kann eine echte Spitze oder auch kuppenartig ausgebildet sein.

Der Erfindung liegt die Aufgabe zugrunde, einen Vertikalmischer der eingangs genannten Art zu schaffen, bei dem unabhängig von der Befüllweise eine intensive, gleichmäßige Durchmischung innerhalb relativ kurzer Mischzeit erzielbar ist.

Die gestellte Aufgabe wird mit den Merkmalen des Anspruchs 1 gelöst.

Durch die schräge Neigung des Verteilerkegels zu der Vertikalschnecke hin, deren Drehrichtung zu diesem Verteilerkegel gerichtet ist, wird ein erheblicher Anteil des Futters an der steileren Leitfläche des Verteilerkegels nach oben gefördert, der dann über die Spitze und die zur Spitze verlaufende Gratkante des Verteilerkegels hinweg zur anderen Seite des Verteilerkegels und von dort der anderen Vertikalschnecke zugeleitet und von dieser mitgenommen wird. In einer Draufsicht auf die gut gefüllte Mischkammer zeigt sich eine kontinuierliche und zügige ovale Zirkulation des Futters, d.h., dass von jedem Maulwurfshügel einer Vertikalschnecke ein beträchtlicher Anteil des Futters zur anderen Vertikalschnecke überwechselt. Dadurch ergeben sich bei jeder Vertikalschnecke in etwa identische Mischungsverhältnisse und in der gesamten Mischkammer eine gleichmäßige Durchmischung des Futters, und zwar bereits nach relativ kurzer Mischzeit. Im Gegensatz zu einem Verteilerkegel, dessen Spitze in etwa senkrecht oberhalb der Basismitte liegt, und dessen Leitflächen symmetrisch sind, erzeugt die steilere Verteilerkegelseite mit den Umfangs- und Aufwärts-Förderkomponenten der zufördernden Vertikalschnecke unerwartet kräftige Aufsteigetendenzen im Futter, die beträchtliche Futteranteile rasch von einer Vertikalschnecke über den Verteilerkegel hinweg zur anderen Vertikalschnecke leiten. Die Vertikalschnecken können in Längsrichtung der Mischkammer ausgerichtet sein, oder quer dazu, oder sogar schräg; wobei stets Verteilerkegel in den Zwischenbereichen zweckmäßig sind.

Die Schrägstellung des Verteilerkegels wird baulich einfach durch Verschieben der Spitze, z.B. entlang der Wand, zu der betreffenden Vertikalschnecke hin bewirkt, wodurch die Leitflächen unter unterschiedlichen Neigungen zur Spitze verlaufen. Der Verteilerkegel wird dadurch deutlich asymmetrisch im Bezug auf die Vertikalebene. An der steiler zur Spitze hochstrebenden Leitfläche steigen von der zufördernden Vertikalschnecke stammende Futteranteile hoch, bis sie über die Spitze und die Gratkante zu der anderen, flacher angestellten Leitfläche überwechseln und dieser entlang nach unten und einwärts zur anderen, abfördernden Vertikalschnecke gelangen.

Zweckmäßigerweise ist die Spitze des Verteilerkegels so weit versetzt, dass die der zufördernden Schnecke abgewandte Begrenzungslinie zwischen dem Verteilerkegel und der Längswand im Wesentlichen parallel ist zu einer Linie, die die Verjüngung der Vertikalschnecke nach oben repräsentiert, und war in einer Ansicht senkrecht auf die Längswand.

Die Leitflächen können gerade oder mit einer konkaven Krümmung in Hochrichtung zur Spitze verlaufen.

Ferner können die Leitflächen, in einem Horizontalschnitt des Verteilerkegels gesehen, konkav gekrümmt sein, und zwar entweder mit einer gleichförmigen Krümmung oder aus einzelnen geraden Abschnitten zusammengesetzt.

Vom in den Zwickelbereich greifenden Spitzenbereich der Basis erstreckt sich eine Gratkante schräg nach oben zur seitlich versetzten Spitze. Die Gratkante begrenzt die flacher abfallende Leitfläche zur abfördemden Schnecke, auf der die übergewechselten Futteranteile zügig nach unten -einwärts gleiten.

Die Spitzenbereiche beider Zwickel liegen bevorzugt auf einer Mittellinie zwischen jeweils zweien der Vertikalschnecken.

Die Wand, z.B. eine Längswand, an die der Verteilerkegel angeschmiegt ist, kann vertikal oder nach oben auswärts geneigt sein, je nach Bauart des Vertikalmischers. Dabei kann die Spitze direkt an der Wand liegen oder über einen Steg oder dgl. etwas von der Wand beabstandet sein.

Herstellungstechnisch einfach ist der Verteilerkegel eine Blechschweißkonstruktion, die vorfertigbar und z.B. an der Längswand anbringbar ist.

Die Spitzen der Verteilerkegel sollten oberhalb des Niveaus der freien Oberseiten der beiden Vertikalschnecken liegen, um auch bei gefüllter Mischkammer eine zügige Zirkulation zu begünstigen. Die schräggestellten Verteilerkegel sind unabhängig davon zweckmäßig, ob die Mischkammer von einem Ende her befüllt wird oder durch eine Fremdbefülleinrichtung von oben zwischen den Vertikalschnecken.

Bei großen Mischkammervolumina können auch mehr als zwei Vertikalschnecken hintereinander angeordnet werden, wobei zwischen jeweils zweien die entgegengesetzten schräggestellten Verteilerkegel vorgesehen werden. Auf diese Weise wird selbst bei der längeren Mischkammer eine zügige ovale Zirkulation des Futters entlang der Seitenwände und der zweckmäßigerweise gerundeten Endwände erzeugt. Grundsätzlich ist dabei darauf hinzuweisen, dass auch ein Futteraustausch zwischen den Vertikalschnecken direkt erfolgt, der die Vergleichmäßigung der Mischungsverhältnisse unterstützt.

Anhand der Zeichnung wird eine Ausführungsform des Erfindungsgegenstandes -erläutert. Es zeigen:
- Fig. 1: einen Längsmittelschnitt eines Vertikalmischers, und
- Fig. 2: eine Draufsicht des Vertikalmischers.

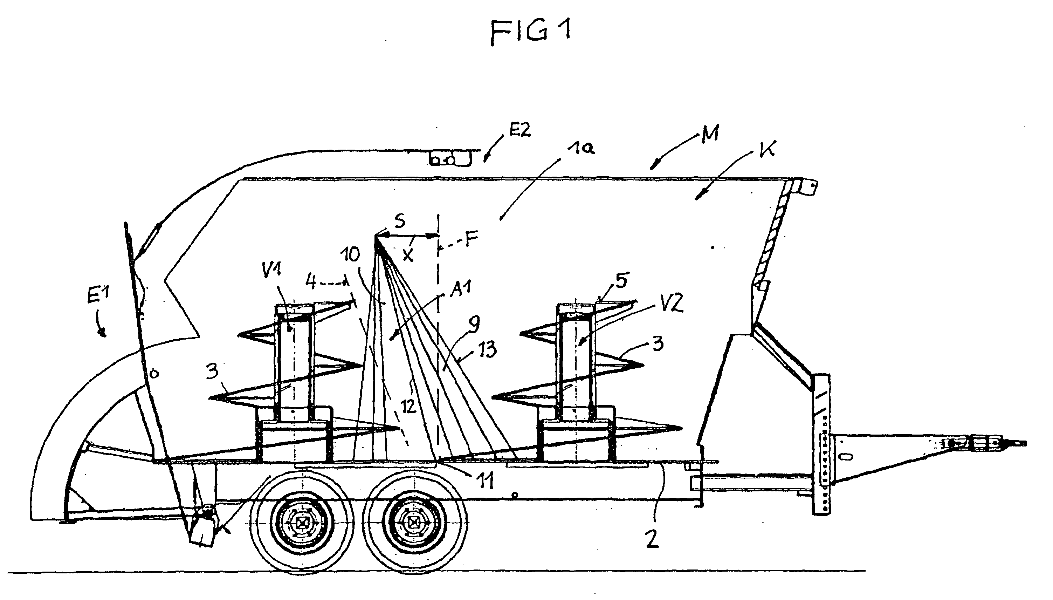

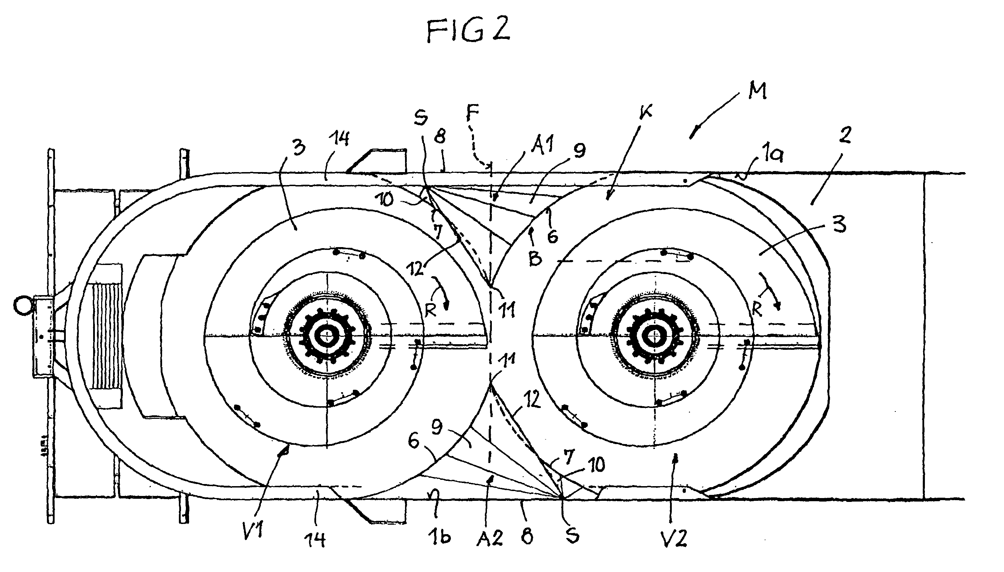

Ein Vertikalmischer M in den Fig. 1 und 2 weist eine bei dieser Ausführungsform ovale Mischkammer K auf, die seitlich von vertikalen (oder gegebenenfalls nach oben einwärts geneigten) Wänden 1a, 1b und einem Boden 2 begrenzt ist. Am hinteren Ende der Mischkammer K kann eine Selbstbefülleinrichtung E1 vorgesehen sein und/oder an der Oberseite der Mischkammer K eine Fremdbefülleinrichtung E2. In der Mischkammer K sind z.B. in Längsrichtung hintereinander zwei Vertikalschnecken V1, V2 mit sich nach oben zu einem freien Ende 5 verjüngenden Schneckengängen 3 angeordnet. Die gestrichelte Linie 4 verdeutlicht in der Längsschnittansicht in Fig. 1 die Verjüngung des Schneckenganges 3. Die beiden Vertikalschnecken V1, V2 sind über nicht gezeigte Antriebsvorrichtungen gleichsinnig (in Fig. 2 jeweils in Uhrzeigersinn) dreh-antreibbar und fördern dabei nach oben. Die Umlaufbahnen der beiden Vertikalschnecken V1, V2 grenzen im Bodenbereich unmittelbar aneinander an, so dass zwischen den beiden Vertikalschnecken zu den Wänden 1a, 1b hin divergierende Zwickelbereiche gebildet sind.

In beiden Zwickelbereichen sind an den Wänden 1a, 1b Verteilerkegel A1, A2 angeordnet. Jeder Verteilerkegel A1, A2 besitzt eine bodenseitige Basis B, die durch konkav gekrümmte, in einem Spitzenbereich 11 zusammengeführte Konturen 6, 7 und eine gerade Basislänge 8 an der jeweiligen Wand 1a, 1b begrenzt wird. Die Konturen 6, 7 folgen den Umlaufbahnen relativ eng, d.h. es wird ein Durchlass freigelassen, der nicht zu klein sein darf.

Die Spitzenbereiche 11 liegen vorzugsweise auf einer Mittellinie zwischen den Umlaufbahnen der Vertikalschnecken. Eine gedachte Vertikalebene F durch die Spitzenbereiche 11 bzw. die Mitten der Basislängen 8 soll als Referenzebene zum Definieren der Asymmetrie der Verteilerkegel A1, A2 dienen. Die Spitze S jedes Verteilerkegels A1, A2 ist nämlich in Bezug auf die Vertikalebene F entlang der jeweiligen Wand 1a, 1b zu derjenigen Vertikalschnecke V1 oder V2 hin mit einem Abstand X versetzt, deren Drehrichtung R zu diesem Verteilerkegel A gerichtet ist. In anderen Worten ist die Spitze S des jeweiligen Verteilerkegels A1, A2 bezüglich der Vertikalebene F zu der Verteilerschnecke V1, V2 hin verlagert, die zu diesem Verteilerkegel hin dreht. Der Abstand X ist so bemessen, dass eine Begrenzungslinie 13 zwischen dem Verteilerkegel A1 (in Fig. 1) an der der Vertikalschnecke V1 abgewandten Seite der Spitze S in etwa parallel ist zu der Linie 4, die die Verjüngung des Schneckenganges 3 repräsentiert.

Von der Basiskontur 6 erstreckt sich eine Leitfläche 9 bis zur Spitze S. Die Leitfläche 9 ist einerseits durch die Wand 1a bzw. 1b und andererseits die Gratkante 12 begrenzt. Von der Basiskontur 7 erstreckt sich eine steilere Leitfläche 10 bis zur Spitze, wobei die Leitfläche 10 ebenfalls von der Wand 1a bzw. 1b und der Gratkante 12 begrenzt ist. Die Leitflächen 9, 10 sind z.B. konkav, wobei die Leitfläche 9 flacher geneigt ist als die Leitfläche 10.

In Fig. 2 oben ist ein nach innen vorspringender Rand 14 der Mischkammer K gezeigt, wobei sich hier die Spitze S des Verteilerkegels A1 in einem kleinen Abstand vor der Wand 1a befindet. Die Spitze S sollte in diesem Fall über eine Art Grat mit der Wand 1a in Verbindung stehen, damit kein Futter zwischen den Verteilerkegel A1 und die Wand 1a eintreten kann.

In Fig. 2 unten ist hingegen die Spitze S direkt an der Wand 1b positioniert, wobei der Deutlichkeit halber der Randbereich 14 in diesem Abschnitt weggeschnitten dargestellt ist. Die Wände 1a, 1b sind beispielsweise die Längswände der Mischkammer K.

Die Drehrichtungen R beider Vertikalschnecken V1, V2 sind gleichsinnig, d.h. im Uhrzeigersinn.

### Funktion:

Im Mischbetrieb bei gefüllter Mischkammer K steigt ein Anteil des Futters in dem über der Vertikalschnecke V1 befindlichen Maulwurfhügel verstärkt entlang der steileren Leitfläche 10 hoch, verursacht durch die in Drehrichtung R und in Hochrichtung wirkenden Förderkomponenten der Vertikalschnecke V1. Dieser Futteranteil wird zum Überwechseln über die Spitze S und die Gratkante 12 auf die andere, flacher abfallende Leitfläche 9 gebracht und gleitet diese entlang nach unten zur anderen Vertikalschnecke V2, die diesen Futteranteil mitnimmt und in den über ihr angeordneten Maulwurfhügel einarbeitet. In analoger Weise steigt an der Leitfläche 10 des anderen Verteilerkegels A2 ein Futteranteil durch die Zuförderwirkung und Hochförderwirkung der Vertikalschnecke V2 hoch, der über die Gratkante 12 und die Spitze S hinweg auf die andere, flacher abfallende Leitfläche 9 gelangt und dieser entlang nach unten zur Vertikalschnecke V1 gelangt und von dieser mitgenommen wird. Dadurch entsteht eine Zirkulation des Futters in mit den Drehrichtungen R übereinstimmender Zirkulationsrichtung entlang der Wände, die zu gleichmäßigen Mischungsverhältnissen bei beiden Vertikalschnecken V1 und einer zügigen Durchmischung des Futters in der Mischkammer K beiträgt. Weitere Futteranteile wechseln auch zwischen den Zwickelbereichen von einer Vertikalschnecke zur anderen über.

## Patentansprüche

1. Vertikalmischer (M) für Futter, mit einer Mischkammer (K), auf deren Boden (2) zwischen im Wesentlichen aufrechten Wänden (1a, 1b) wenigstens zwei in Längsrichtung der Mischkammer (K) benachbarte Vertikalschnecken (V1, V2) angeordnet sind, die zum aufwärtsfördemden Mischen gleichsinnig drehantreibbar sind, und mit in den Zwickelbereichen zwischen den Umlaufbahnen der beiden Vertikalschnecken an den Wänden angeordneten Verteilerkegeln (A1, A2), deren jeder als Oberfläche von einer in den Zwickelbereich greifenden bodenseitigen Basis (B) zu einer zumindest nahe bei der Wand (1a, 1b) positionierten Spitze (S) verlaufende Leitflächen (9, 10) aufweist, **dadurch gekennzeichnet, dass** jeder Verteilerkegel (A1, A2) schräg zu derjenigen Vertikalschnecke (V1, V2) geneigt ist, deren Drehrichtung (R) an der Schneckenseite dieses Verteilerkegels zum Verteilerkegel gerichtet ist.

2. Vertikalmischer nach Anspruch 1, **dadurch gekennzeichnet, dass** die Spitze (S) des Verteilerkegels (A1, A2) mit einem Abstand (X) von einer Vertikalebene (F) in etwa durch die beiden Längsmitten der längswandseitigen Basislängen (8) beider Verteilerkegel und näher bei derjenigen Vertikalschnecke (V1 oder V2) angeordnet ist, deren Drehrichtung (R) an der Schneckenseite dieses Verteilerkegels zum Verteilerkegel gerichtet ist, als bei der jeweils anderen Vertikalschnecke (V2 oder V1).

3. Vertikalmischer nach Anspruch 2, **dadurch gekennzeichnet, dass** die Spitze (S) des Verteilerkegels (A1, A2) so weit gegenüber der Vertikalebene (F) versetzt ist, dass eine Begrenzungslinie (13) des Verteilerkegels, die an der der Spitze (S) gegenüberliegenden Seite der Vertikalebene (F) beginnend entlang der Wand (1a) von der Basis (B) zur Spitze (S) verläuft, in etwa parallel ist zu einer die Abnahme des Schneckendurchmessers in Hochrichtung repräsentierenden Linie (4), in Ansichtsrichtung senkrecht zu den Schneckenachsen zwischen beiden Vertikalschnecken hindurch.

4. Vertikalmischer nach Anspruch 1, **dadurch gekennzeichnet, dass** die Leitflächen (10) der Basis (B) zur Spitze (S) gerade oder konkav gekrümmt verlaufen.

5. Vertikalmischer nach Anspruch 1, **dadurch gekennzeichnet, dass** die Leitflächen (9, 10) - in einem Horizontalschnitt des Verteilerkegels gesehen - konkav gekrümmt sind.

6. Vertikalmischer nach Anspruch 1, **dadurch gekennzeichnet, dass** zwei - in einem Horizontalschnitt des Verteilerkegels gesehen - konkave Leitflächen (9, 10) in einer Gratkante (12) miteinander verbunden sind, die von dem in den Zwickel zwischen den Vertikalschnecken (V1, V2) greifenden Spitzenbereich (11) der Basis (B) schräg aufwärts zur Spitze (S) verläuft.

7. Vertikalmischer nach Anspruch 6, **dadurch gekennzeichnet, dass** die Spitzenbereiche (11) beider Zwickelbereiche zumindest in etwa auf einer Mittellinie zwischen den Vertikalschnecken (V1, V2) liegen.

8. Vertikalmischer nach Anspruch 1, **dadurch gekennzeichnet, dass** sich der schräggeneigte Verteilerkegel (A1, A2) an die vertikale oder nach oben auswärts geneigte Wand (1a, 1b) anschmiegt.

9. Vertikalmischer nach wenigstens einem der vorhergehenden Ansprüche, **dadurch gekennzeichnet, dass** der Verteilerkegel (A1, A2) eine Blechschweißkonstruktion ist.

10. Vertikalmischer nach wenigstens einem der vorhergehenden Ansprüche, **dadurch gekennzeichnet, dass** die Spitzen (S) beider Verteilerkegel (A1, A2) oberhalb der freien Oberseiten (5) der Vertikalschnecken (V1, V2) angeordnet sind.

11. Vertikalmischer nach wenigstens einem der vorhergehenden Ansprüche, **dadurch gekennzeichnet, dass** der Vertikalmischer (M) an wenigstens einem Längsende der Mischkammer (K) eine Selbstbefülleinrichtung (E1) und/oder an einer Oberseite der Mischkammer (K) und zwischen den Vertikalschnecken eine Fremdbefülleinrichtung (E2) aufweist.

12. Vertikalmischer nach wenigstens einem der vorhergehenden Ansprüche, **dadurch gekennzeichnet, dass** in der Mischkammer(K) mehr als zwei Vertikalschnecken (V1, V2) vorgesehen sind, deren Schneckenachsen in Längsrichtung der Mischkammer (K) hintereinander liegen wobei zwischen jeweils zweien die entgegengesetzten schräggestellten Verteilerkegel (A1, A2) vorgesehen werden, und dass die Verteilerkegel (A1) an der einen Längswand (1a) in einer Richtung schräg und die Verteilerkegel (A2) an der gegenüberliegenden Längswand (1b) in der entgegengesetzten Richtung schräg geneigt sind.

## Claims

1. Vertical mixing device (M) for fodder, comprising a mixing chamber (K) at the bottom (2) of which between essentially upright walls (1a, 1b) at least two vertical augers (V1, V2) are provided in longitudinal direction of said mixing chamber (K), which vertical augers can be driven with the same sense of rotation for mixing and conveying fodder upwardly, and further including distributor cones (A1, A2) situated at side walls in the wedge areas between the rotational courses of both vertical augers, each distributor cone having guiding surfaces (9, 10) defining the surface of said distributor cone, said guiding surfaces (9, 10) extending from a cone bottom side base (B) located in one of said wedge areas to an upper tip (S) positioned at least close to said wall (1a, 1b), **characterised in that** each distributor cone (A1, A2) is inclined obliquely to the one of said vertical augers (V1, V2), the rotational sense (R) of which at the auger side of said distributor cone is directed towards said distributor cone.

2. Vertical mixing device as in claim 1, **characterised in that** said tip (S) of each of said distributor cones (A1, A2) is situated offset along said longitudinal walls with a distance (X) from a vertical plane (F) situated in the midst of both base longitudinal sides (8) of the bases of both distributor cones closer to the vertical auger (V1 or V2), the rotational sense (R) of which is directed to the auger side of said distributor cone.

3. Vertical mixing device as in claim 2, **characterised in that** said tip (S) of said distributor cone (A1, A2) is offset that far with respect to said vertical plane (F) that a borderline (13) of said distributor cone at the side of the tip (S) remote from said vertical plane (F) extends alongside of wall (A1 ) from said base (B) to said tip (S) essentially parallel to a line (4) representing the taper of the auger lobe diameter in upward direction and in a view perpendicular to both auger axes and in the middle between both vertical augers.

4. Vertical mixing device as in claim 1, **characterised in that** said guiding surfaces (9, 10) extend from said base (B) to said tip (S) either straight or with a concave curvature.

5. Vertical mixing device as in claim 1, **characterised in that** said guiding surfaces (9,10) are curved concavely, seen in a horizontal section of said distributor cone.

6. Vertical mixing device as in claim 1, **characterised in that** seen in a horizontal section of each of said distributor cones two concave guiding surfaces (9, 10) form an edge (12) extending from a pointed region (11) of said base (B) upward to said tip (S), said base (B) engaging into a wedge area between both vertical augers (V1, V2).

7. Vertical mixing device as in claim 6, **characterised in that** said pointed regions (11) of both bases (B) are located on a lateral centre line between both vertical augers (V1, V2).

8. Vertical mixing device as in claim 1, **characterised in that** each of said inclined distributor cones (A1, A2) is snuggly put against the respective wall (1a, 1b), which wall either is vertical or is inclined outwardly or inwardly within said mixing chamber (K).

9. Vertical mixing device as in at least one of the preceding claims, **characterised in that** each of said distributor cones (A1, A2) is a welded sheet metal construction.

10. Vertical mixing device as in at least one of the preceding claims, **characterised in that** said tips (S) of both distributor cones (A1, A2) are situated above the level of free upper sides (5) of said vertical augers (V1, V2).

11. Vertical mixing device as in at least one of the preceding claims, **characterised in that** said vertical mixing device (M) has an own filling device (E1) at least at one longitudinal end of said mixing chamber (K) and/or has an exterior filling device (E2) at a top side of said mixing chamber (K) and between said vertical augers an exterior filling device (E2).

12. Vertical mixing device as in at least one of the preceding claims, **characterised in that** more than two vertical augers (V1, V2) are provided within said mixing chamber (K), with their auger axes situated in longitudinal direction of said mixing chamber (K) one behind the other, that between two respective adjacent vertical augers (V1, V2) the oppositely obliquely inclined distributor cones (A1, A2) are provided, and that the distributor cones (A1 ) provided at one longitudinal wall (1a) are inclined obliquely in the same direction while the distributor cones (A2) provided at the opposite longitudinal wall (1b) are inclined obliquely in the opposite direction.

## Revendications

1. Malaxeur vertical (M) pour fourrage, comportant une chambre de malaxage (K) sur le plancher (2) de laquelle, entre des parois (1a, 1b) essentiellement verticales, sont disposées, voisines dans la direction longitudinale de la chambre de malaxage (K), au moins deux vis d'Archimède verticales (V1, V2) qui peuvent être entraînées en rotation dans le même sens pour le malaxage avec transport vers le haut, et comportant dans les zones d'encoignure entre les périmètres de rotation des deux vis d'Archimède verticales des cônes répartiteurs (A1, A2) disposés contre les parois, dont chacun présente en tant que surface d'une base (B) pénétrant dans la zone d'encoignure des surfaces guides (9, 10) s'étendant en direction d'un sommet (S) positionné du moins à proximité de la paroi (1a, 1b), **caractérisé en ce que** chaque cône répartiteur (A1, A2) est incliné obliquement vers la vis d'Archimède verticale (V1, V2), dont le sens de rotation (R) est orienté vers le cône répartiteur, sur le côté de ce cône répartiteur.

2. Malaxeur vertical selon la revendication 1, **caractérisé en ce que** le sommet (S) du cône répartiteur (A1, A2) est disposé à distance (X) d'un plan vertical (F) passant sensiblement par les deux milieux longitudinaux des longueurs de base (8) des deux cônes répartiteurs du côté des parois longitudinales, et plus près de la vis d'Archimède verticale (V1 ou V2) dont le sens de rotation (R) est orienté vers le cône répartiteur, sur le côté de ce cône répartiteur tourné vers la vis d'Archimède, que de l'autre vis d'Archimède verticale (V2 ou V1) considérée.

3. Malaxeur vertical selon la revendication 2, **caractérisé en ce que** le sommet (S) des cônes répartiteurs (A1, A2) est décalé par rapport au plan vertical (F) d'une distance telle qu'une ligne de délimitation (13) du cône répartiteur qui, commençant sur le côté du plan vertical (F) opposé au sommet (S) s'étend le long de la paroi (1a), de la base (B) au sommet (S), est sensiblement parallèle à une ligne (4) représentant la diminution du diamètre des vis d'Archimède dans le sens ascendant, dans une direction d'observation perpendiculaire aux axes des vis entre les deux vis d'Archimède verticales.

4. Malaxeur vertical selon la revendication 1, **caractérisé en ce que** les surfaces guides (10) s'étendent en ligne droite ou ont une courbure concave, de la base (B) au sommet (S).

5. Malaxeur vertical selon la revendication 1, **caractérisé en ce que** les surfaces guides (9, 10) - vues dans une coupe horizontale du cône répartiteur - ont une courbure concave.

6. Malaxeur vertical selon la revendication 1, **caractérisé en ce que** deux surfaces guides (9, 10) concaves - vues dans une coupe horizontale du cône répartiteur - sont reliées l'une à l'autre en une arête saillante (12), qui s'étend obliquement vers le haut de la zone sommitale (11) pénétrant dans l'encoignure entre les deux vis d'Archimède verticales (V1, V2) de la base (B) vers le sommet (S).

7. Malaxeur vertical selon la revendication 6, **caractérisé en ce que** les zones sommitales (11) des deux zones d'encoignure se situent sensiblement sur une ligne médiane entre les vis d'Archimède verticales (V1, V2).

8. Malaxeur vertical selon la revendication 1, **caractérisé en ce que** le cône répartiteur (A1, A2). incliné obliquement s'applique sur la paroi (1a, 1b) verticale ou inclinée extérieurement vers le haut.

9. Malaxeur vertical selon l'une des revendications précédentes, **caractérisé en ce que** le cône répartiteur (A1, A2) est une structure en tôle soudée.

10. Malaxeur vertical selon l'une des revendications précédentes, **caractérisé en ce que** les sommets (S) des deux cônes répartiteurs (A1, A2) sont disposés au-dessus des côtés supérieurs (5) libres des vis d'Archimède verticales (V1, V2).

11. Malaxeur vertical selon l'une des revendications précédentes, **caractérisé en ce que** le malaxeur vertical (M) présente à au moins une extrémité longitudinale de la chambre de malaxage (K) un dispositif d'au-to-remplissage (E1) et/ou sur le côté supérieur de la chambre de malaxage (K), et entre les vis d'Archimède verticales, un dispositif de remplissage séparé (E2).

12. Malaxeur vertical selon l'une des revendications précédentes, **caractérisé en ce que** dans la chambre de malaxage (K) sont prévues plus de deux vis d'Archimède verticales (V1, V2), dont les axes de vis sont situés l'un derrière l'autre dans la direction longitudinale de la chambre de malaxage (K), des cônes répartiteurs (A1, A2) inclinés en sens opposés étant prévus entre chaque paire, et **en ce que** les cônes répartiteurs (A1) sur l'une des parois longitudinales (1a) sont inclinés obliquement dans un sens et les cônes répartiteurs (A2) sur la paroi longitudinale (1b) située en regard obliquement dans le sens opposé.
